# EUROPEAN PATENT APPLICATION

(11) **EP 4 063 179 A1**
(43) Date of publication of application: **28.09.2022**
(21) Application number: 21760659.9
(22) Date of filing: 25.02.2021
(51) Int. Cl.: B60L 58/12

(54) **STATE OF CHARGE LOWER LIMIT CONTROL METHOD AND APPARATUS FOR POWER BATTERY, AND VEHICLE**

(30) Priority: 25.02.2020 CN 202010115661
(71) Applicant: Great Wall Motor Company Limited, Baoding, Hebei 071000 (CN)
(72) Inventor: ZHAO, Qing, Baoding, Hebei 071000 (CN); CHEN, Shujiang, Baoding, Hebei 071000 (CN)
(74) Representative: Klunker IP Patentanwälte PartG mbB
(86) International application number: PCT/CN2021/077829
(87) International publication number: WO 2021/170024

(57) **Abstract**

A method and a device for controlling a lower limit of a state-of-charge state of a power battery, and a vehicle are provided, the method for controlling the lower limit of the state-of-charge state of the power battery includes: detecting, by a detection unit (1), a minimum ambient temperature and a minimum power battery temperature in at least one time period; evaluating, by an evaluation unit (2), a minimum power battery temperature in a preset time period after the at least one time period according to the minimum ambient temperature and the minimum power battery temperature in the at least one time period; determining, by a processing unit (3), a minimum state-of-charge value that can meet a start-up power requirement of a vehicle engine at the minimum power battery temperature in the preset time period, adjusting a lower limit value of the state-of-charge according to the minimum state-of-charge value, in order that the vehicle can be powered-up by a state-of-charge value of the battery at low temperature environment.

## Description

### CROSS-REFERENCE TO RELATED APPLICATIONS

This application claims priority to Chinese patent application No. 202010115661.4 filed on February 25, 2020 and entitled "method and device for controlling lower limit of state-of-charge of power battery, and vehicle", the entire contents of which are incorporated herein by reference.

### TECHNICAL FIELD

The present disclosure relates to the technical field of new energy vehicles, and more particularly to a method for controlling lower limit of state-of-charge of power battery, a device for controlling lower limit of state-of-charge of power battery, and a vehicle.

### DESCRIPTION OF RELATED ART

Along with energy crisis and environmental pollution problems becoming apparent, hybrid vehicles have become an important development direction of automotive industry due to their prominent advantages in aspects of energy conservation and environmental protection. At present, a lower limit of a state of charge of power battery used by the hybrid vehicles is fixed during use of the hybrid vehicles; when a battery of a vehicle has a low state-of-charge value, after the vehicle is stopped and powered-off, the battery has such a low state-of-charge value that it may not be able to enable the vehicle to be normally powered-up at a low temperature environment, so that an usage of normal functions of the vehicle is affected after the vehicle is powered-up next time.

### SUMMARY

In view of this, an objective of the present disclosure is to propose a method for controlling a lower limit of a state-of-charge of a power battery, a device for controlling the lower limit of the state-of-charge of the power battery, and a vehicle, thereby ensuring that the state-of-charge value of the battery at the low temperature environment can enable the vehicle to be normally powered-up.

In order to achieve this objective, the technical solutions of the present disclosure are implemented in this manner:

a method for controlling a lower limit of a state-of-charge of a power battery, including: detecting a minimum ambient temperature and a minimum power battery temperature in at least one time period; evaluating a minimum power battery temperature in a preset time period after the at least one time period according to the minimum ambient temperature and the minimum power battery temperature in the at least one time period; determining a minimum state-of-charge value that can meet a start-up power requirement of a vehicle engine at the minimum power battery temperature in the preset time period according to the minimum power battery temperature in the preset time period; adjusting a lower limit value of the state-of-charge according to the minimum state-of-charge value .

In one embodiment, the minimum ambient temperature and the minimum power battery temperature in the at least one time period only include a minimum ambient temperature and a minimum power battery temperature in a first time period, evaluating the minimum power battery temperature in the preset time period after the at least one time period according to the minimum ambient temperature and the minimum power battery temperature in the at least one time period includes: calculating the minimum power battery temperature in the preset time period according to the minimum power battery temperature, a temperature constant and a first power battery temperature evaluation factor in the first time period.

In one embodiment, the minimum ambient temperature and the minimum power battery temperature in the at least one time period include a minimum ambient temperature and a minimum power battery temperature in a first time period and a minimum ambient temperature and a minimum power battery temperature in a second time period, the second time period is subsequent to the first time period, evaluating the minimum power battery temperature in the preset time period after the at least one time period according to the minimum ambient temperature and the minimum power battery temperature in the at least one time period includes: evaluating the minimum power battery temperature in the preset time period as the minimum power battery temperature in the first time period, when determining that the minimum ambient temperature in the first time period is lower than or equal to the minimum ambient temperature in the second time period, and the minimum power battery temperature in the first time period is lower than or equal to the minimum power battery temperature in the second time period; evaluating the minimum power battery temperature in the preset time period as the minimum power battery temperature in the second time period, when determining that the minimum ambient temperature in the first time period is lower than or equal to the minimum ambient temperature in the second time period, and the minimum power battery temperature in the first time period is higher than the minimum power battery temperature in the second time period.

In one embodiment, the minimum ambient temperature and the minimum power battery temperature in the at least one time period include a minimum ambient temperature and a minimum power battery temperature in a first time period and a minimum ambient temperature and a minimum power battery temperature in a second time period, the second time period is subsequent to the first time period, evaluating the minimum power battery temperature in the preset time period after the at least one time period according to the minimum ambient temperature and the minimum power battery temperature in the at least one time period includes: calculating the minimum power battery temperature in the preset time period according to the minimum power battery temperature in the first time period, the minimum power battery temperature in the second time period and a second power battery temperature evaluation factor when determining that the minimum ambient temperature in the first time period is higher than the minimum ambient temperature in the second time period, and the minimum power battery temperature in the first time period is higher than the minimum power battery temperature in the second time period; calculating the minimum power battery temperature in the preset time period according to the minimum power battery temperature in the first time period, a temperature constant and a third power battery temperature evaluation factor, when determining that the minimum ambient temperature in the first time period is higher than the minimum ambient temperature in the second time period, and the minimum power battery temperature in the first time period is lower than or equal to the minimum power battery temperature in the second time period.

In one embodiment, determining the minimum state-of-charge value that can meet the start-up power requirement of the vehicle engine at the minimum power battery temperature in the preset time period according to the minimum power battery temperature in the preset time period includes: substituting the minimum power battery temperature in the preset time period into a discharge power Map of the power battery to obtain the minimum state-of-charge value .

As compared to the prior art, the method for controlling the lower limit of the state-of-charge of the power battery has the following advantages:

the method for controlling the lower limit of the state-of-charge of the power battery includes: detecting a minimum ambient temperature and a minimum power battery temperature in at least one time period; evaluating a minimum power battery temperature in a preset time period after the at least one time period according to the minimum ambient temperature and the minimum power battery temperature in the at least one time period; determining a minimum state-of-charge value that can meet a start-up power requirement of a vehicle engine at the minimum power battery temperature in the preset time period according to the minimum power battery temperature in the preset time period; adjusting a lower limit value of the state-of-charge according to the minimum state-of-charge value. Since the minimum power battery temperature in the future preset time of period has been evaluated, the lower limit value of the state-of-charge of the power battery is adjusted according to the minimum power battery temperature in the future preset time period, in order that the state-of-charge value of the power battery of the vehicle is not lower thanq the lower limit value, so that it is ensured that the state-of-charge value at the low temperature environment can enable the vehicle to be normally powered-up.

Another objective of the present disclosure is to propose a device for controlling a lower limit of a state-of-charge of a power battery, thereby ensuring that the state-of-charge value of the power battery at the low temperature environment can enable the vehicle to be powered-up normally.

In order to achieve this objective, the technical solutions of the present disclosure are implemented in this manner:

a device for controlling a lower limit of a state-of-charge of a power battery, including a detection unit, an evaluation unit and a processing unit, where the detection unit is configured to detect a minimum ambient temperature and a minimum power battery temperature in at least one time period; the evaluation unit is configured to evaluate a minimum power battery temperature in a preset time period after the at least one time period according to the minimum ambient temperature and the minimum power battery temperature in the at least one time period; the processing unit is configured to determine a minimum state-of-charge value that can meet a start-up power requirement of a vehicle engine at the minimum power battery temperature in the preset time period according to the minimum power battery temperature in the preset time period, adjust a lower limit value of the state-of-charge according to the minimum state-of-charge value.

In one embodiment, the minimum ambient temperature and the minimum power battery temperature in the at least one time period only include a minimum ambient temperature and a minimum power battery temperature in a first time period, the evaluation unit is further configured to calculate the minimum power battery temperature in the preset time period according to the minimum power battery temperature, a temperature constant and a first power battery temperature evaluation factor in the first time period.

In one embodiment, the minimum ambient temperature and the minimum power battery temperature in the at least one time period include a minimum ambient temperature and a minimum power battery temperature in a first time period and a minimum ambient temperature and a minimum power battery temperature in a second time period, the second time period is subsequent to the first time period, the evaluation unit is further configured to: evaluate the minimum power battery temperature in the preset time period as the minimum power battery temperature in the first time period when determining that the minimum ambient temperature in the first time period is lower than or equal to the minimum ambient temperature in the second time period, and the minimum power battery temperature in the first time period is lower than or equal to the minimum power battery temperature in the second time period; evaluate the minimum power battery temperature in the preset time period as the minimum power battery temperature in the second time period when determining that the minimum ambient temperature in the first time period is lower than or equal to the minimum ambient temperature in the second time period, and the minimum power battery temperature in the first time period is higher than the minimum power battery temperature in the second time period.

In one embodiment, the minimum ambient temperature and the minimum power battery temperature in the at least one time period include a minimum ambient temperature and a minimum power battery temperature in a first time period and a minimum ambient temperature and a minimum power battery temperature in a second time period, the second time period is subsequent to the first time period, the evaluation unit is further configured to: calculate the minimum power battery temperature in the preset time period according to the minimum power battery temperature in the first time period, the minimum power battery temperature in the second time period and a second power battery temperature evaluation factor when determining that the minimum ambient temperature in the first time period is higher than the minimum ambient temperature in the second time period, and the minimum power battery temperature in the first time period is higher than the minimum power battery temperature in the second time period; calculate the minimum power battery temperature in the preset time period according to the minimum power battery temperature in the first time period, a temperature constant and a third power battery temperature evaluation factor when determining that the minimum ambient temperature in the first time period is higher than the minimum ambient temperature in the second time period, and the minimum power battery temperature in the first time period is lower than or equal to the minimum power battery temperature in the second time period.

The device for controlling the lower limit of the state-of-charge of the power battery and the method for controlling the lower limit of the state-of-charge of the power battery have the same advantages over the prior art, so that the advantages of the device for controlling the lower limit of the state-of-charge of the power battery are not repeatedly described here.

Another objective of the present disclosure is to propose a vehicle to ensure that the state-of-charge value of the power battery at the low temperature environment can enable the vehicle to be powered-up normally.

In order to achieve this objective, the technical solutions of the present disclosure are implemented in this manner:

A vehicle, including the device for controlling the lower limit of the state-of-charge of the power battery as described above.

The vehicle and the device for controlling the lower limit of the state-of-charge of the power battery have the same advantages over the prior art, so that the advantages of the vehicle are not repeatedly described here.

Another objective of the present disclosure is to propose a computer readable storage medium to ensure that the state-of-charge value of the power battery at the low temperature environment can enable the vehicle to be powered-up normally.

In order to achieve this objective, the technical solutions of the present disclosure are implemented in this manner:

A computer readable storage medium which stores an instruction that is executed to cause a machine to perform the aforesaid method for controlling the lower limit of the state-of-charge of the power battery.

The computer readable storage medium and the method for controlling the lower limit of the state-of-charge of the power battery have the same advantages over the prior art, so that the advantages of the computer readable storage medium are not repeatedly described here.

Other features and benefits of the present disclosure will be described in detail in the subsequent detailed description of embodiments.

### BRIEF DESCRIPTION OF THE DRAWINGS

The accompanying figures that constitute a part of the present disclosure are used to provide further interpretation of the present disclosure, the schematic implementations and the explanations of the schematic implementations are intended to explain the present disclosure but not constitute as inappropriate limitation to the present disclosure. In the figures:
FIG. 1 is a schematic flowchart of a method for controlling a lower limit of a state-of-charge of a power battery provided by one embodiment of the present disclosure;
FIGS. 2A-2B are schematic flowcharts of the method for controlling the lower limit of the state-of-charge of the power battery provided by another embodiment of the present disclosure;
FIG. 3 illustrates a schematic diagram of a device for controlling a lower limit of a state-of-charge of a power battery provided by one embodiment of the present disclosure.

### Reference signs are described below:

1-detection unit; 2-evaluation unit
3-processing unit

### DETAILED DESCRIPTION OF EMBODIMENTS

It should be noted that, in the case of no conflict, the embodiments of the present disclosure and the features in the embodiments may be combined with each other.

The present disclosure will be described in detail below with reference to the accompanying drawings and in combination with the embodiments.

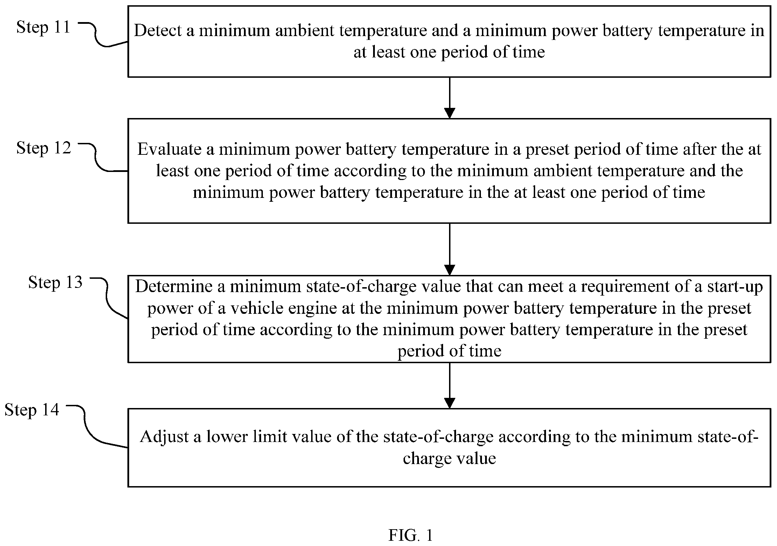

FIG. 1 is a flowchart of a method for controlling a state-of-charge of a power battery according to one embodiment of the present disclosure. As shown in FIG. 1, this control method includes:

At step S11, a minimum ambient temperature and a minimum power battery temperature in at least one time period are detected.

In particular, a temperature sensor may be used to detect an ambient temperature and a power battery temperature, then, the ambient temperature and the power battery temperature are stored, then, the minimum ambient temperature and the minimum power battery temperature are calculated. The at least one time period may be, for example, a time period such as 5 days, 10 days or 30 days, as an alternative, the at least one time period may be two time periods (two separate 5 days). If the at least one time period refers to two separate time periods, the minimum ambient temperature and the minimum power battery temperature in each of the two separate time periods are obtained respectively.

It is obvious that, since the present disclosure is directed to vehicles, it is also possible to use various functional devices equipped on a vehicle to detect the minimum ambient temperature and the minimum power battery temperature. For example, in particular:

BMS (Battery Management System) can detect the temperature of the power battery after regular self-wake-up (which may be performed by multiple times), a CAN (Controller Area Network) of the vehicle is waken up when the temperature of the power battery is below a temperature threshold (e.g., 0°C), then, the BMS waits for sleep. Then, an air conditioner controller is awakened to send the current ambient temperature to a HCU (Hybrid Control Unit), and then waits for sleep. A HUT (Head Unit System) is awakened to send the current date and time to the HCU, and then waits for sleep. After the HCU is awakened, the HCU is configured to: receive the temperature of the power battery and the ambient temperature; write the received temperature of the power battery and the ambient temperature into a daily record of power battery temperature and ambient temperature; and calculate the minimum power battery temperature and the minimum ambient temperature in this day based on the effective record (the effective record is not equal to a default value 100, the temperature is invalid if a failure of temperature detection of the BMS or the air conditioner controller occurs) of power battery temperature and the ambient temperature record in this day; and record the minimum power battery temperature and the ambient temperature in this day, and thereby obtains the minimum power battery temperature and the minimum ambient temperature in any time period according to the daily record of the minimum power battery temperature and the ambient temperature. If the daily record of the minimum power battery temperature and the daily record of the minimum ambient temperature are invalid in one certain time period (i.e., the default value 100), it means that the minimum power battery temperature or the minimum ambient temperature in this time period is also invalid (i.e., the default value 100).

At step S12, a minimum power battery temperature in a preset time period after the at least one time period is evaluated according to the minimum ambient temperature and the minimum power battery temperature in the at least one time period.

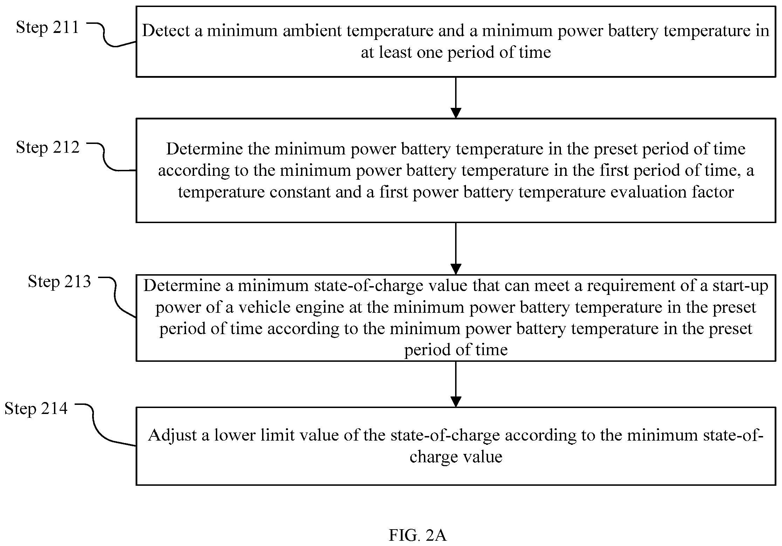

In particular, as shown in FIG. 2A, if the at least one time period is only one time period (e.g., the first time period), or the at least one time period refers to two time periods, however, the minimum ambient temperature or the minimum power battery temperature in one of the two time periods is invalid (i.e., the default value is 100), in this case, the step S212 is performed to replace the step S12, and the minimum power battery temperature in the preset time period is calculated according to the minimum power battery temperature in the first time period, the temperature constant and the first power battery temperature evaluation factor.

A formula is expressed as: T0=T1+C×q1, where TO is the minimum power battery temperature in the preset time period, T1 is the minimum power battery temperature in the first time period, C is the temperature constant, and q1 is the first power battery temperature evaluation factor. The temperature constant is, for example, 5°C, this constant value may be calibrated according to actual requirement. The first power battery temperature evaluation factor q1 may be obtained by being substituted into the minimum power battery temperature T1 and the minimum ambient temperature in the first time period, and by querying a "correspondence table between the power battery temperature evaluation factor and the minimum power battery temperature and the minimum ambient temperature". A range of the first power battery temperature evaluation factor q1 is between 0 and 2, preferably. The correspondence table between the power battery temperature evaluation factor and the minimum power battery temperature and the minimum ambient temperature may be obtained by calibrating previously; for example, if the minimum ambient temperature and the minimum power battery temperature of the past 10 days are used to evaluate the minimum ambient temperature and the minimum power battery temperature in the future 10 days after the past 10 days (i.e., the preset time period described above), then, the minimum ambient temperature and the minimum power battery temperature in the past 10 days are detected after the temperature constant C is set, then, the minimum ambient temperature and the minimum power battery temperature in the future 10 days after the past 10 days are detected, then, the detection values are substituted into the formula T0=T1+C×q1 to obtain the first power battery temperature evaluation factor q1. The aforesaid process is repeatedly executed for many times, so that the first power battery temperature evaluation factor q1 corresponding to the various minimum ambient temperatures and the minimum power battery temperatures in many past 10 days may be obtained according to a large amount of actual data; this calibration method is commonly used, and the details of this calibration method are not repeatedly described here.

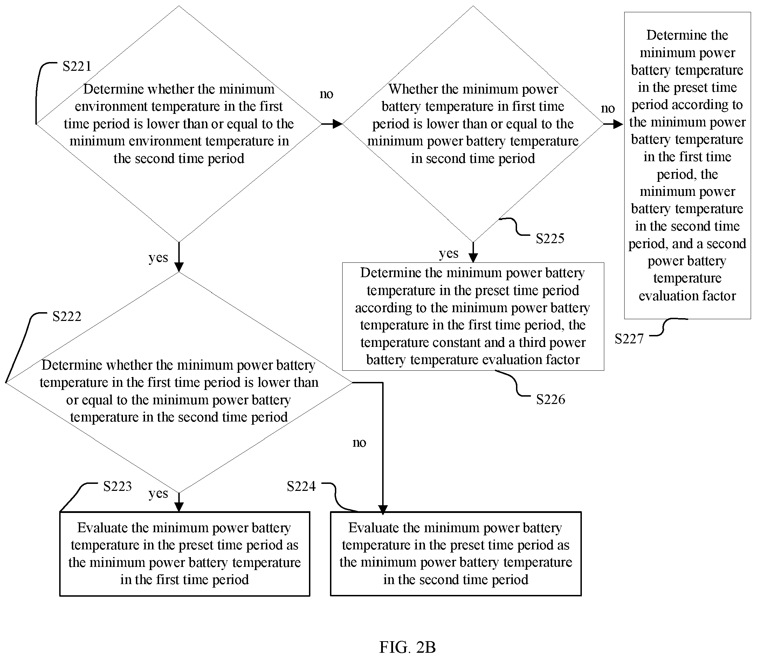

As shown in FIG. 2B, if the at least one time period refers to two time periods, that is, the first time period and the second time period (i.e., the second time period is subsequent to the first time period), and the minimum ambient temperatures and the minimum power battery temperatures in the two time periods are valid, the following steps S221-S227 are performed to replace the step S12.

At step S221, whether the minimum ambient temperature in the first time period is lower than or equal to the minimum ambient temperature in the second time period is determined;

At step S222, whether the minimum power battery temperature in the first time period is lower than or equal to the minimum power battery temperature in the second time period is determined when the minimum ambient temperature in the first time period is lower than or equal to the minimum ambient temperature in the second time period;

At step S223, the minimum power battery temperature in the preset time period is evaluated as the minimum power battery temperature in the first time period, when the minimum power battery temperature in the first time period is lower than or equal to the minimum power battery temperature in the second time period;

At step S224, the minimum power battery temperature in the preset time period is evaluated as the minimum power battery temperature in the second time period, when the minimum power battery temperature in the first time period is higher than the minimum power battery temperature in the second time period.

At step S225, whether the minimum power battery temperature in the first time period is lower than or equal to the minimum power battery temperature in the second time period is determined, when the minimum ambient temperature in the first time period is higher than the minimum ambient temperature in the second time period;

At step S226, the minimum power battery temperature in the preset time period is calculated according to the minimum power battery temperature, the temperature constant and the third power battery temperature evaluation factor in the first time period, when the minimum power battery temperature in the first time period is lower than or equal to the minimum power battery temperature in the second time period.

At step S226, the specific calculation formula is expressed as:

TO = T1+C×q3, where TO is the minimum power battery temperature in the preset time period, T1 is the minimum power battery temperature in the first time period, C is the temperature constant, and q3 is the third power battery temperature evaluation factor. The third power battery temperature evaluation factor may likewise be obtained by being substituted into the minimum power battery temperature T1 and the minimum ambient temperature in the first time period, and by querying the "correspondence table between the power battery temperature evaluation factor and the minimum power battery temperature and the minimum ambient temperature". A range of the third power battery temperature evaluation factor q3 is between 0 and 2, preferably.

In step S227, the minimum power battery temperature in the preset time period is calculated according to the minimum power battery temperature in the first time period, the minimum power battery temperature in the second time period and the second power battery temperature evaluation factor, when the minimum power battery temperature in the first time period is higher than the minimum power battery temperature in the second time period.

At step S227, the specific calculation formula is expressed as:

TO=T2 +(T2-T1)×q2, where TO is the minimum power battery temperature in the preset time period, T1 is the minimum power battery temperature in the first time period, T2 is the minimum power battery temperature in the second time period, and q2 is the second power battery temperature evaluation factor. The second power battery temperature evaluation factor q2 may likewise be obtained by being substituted into a difference between the minimum ambient temperature T2 in the second time period and the minimum ambient temperature T1 in the first time period and a difference between the minimum power battery temperature in the second time period and the minimum power battery temperature in the first time period, and by querying the corresponding table between power battery temperature evaluation factor and the minimum power battery temperature and the minimum ambient temperature. A range of the second power battery temperature evaluation factor q2 is between 0 and 2, preferably.

At step S13, determining a minimum state-of-charge value that can meet a start-up power requirement of a vehicle engine at the minimum power battery temperature in the preset time period according to the minimum power battery temperature in the preset time period;

In particular, the minimum power battery temperature in the preset time period is substituted into a discharge power Map of the power battery to obtain the minimum state-of-charge value. The discharge power Map of the power battery is known, but is different for different vehicles or power batteries.

At step S14, a lower limit value of the state-of-charge is adjusted according to the minimum state-of-charge value.

In particular, a reserved quantity is added to the minimum state-of-charge value to serve as the lower limit value of the evaluated state-of-charge for ensuring low-temperature cold start of the engine. The one having greater value in the evaluated lower limit value of the state-of-charge for ensuring the low-temperature cold start of the engine and a lower limit value of a state-of-charge of a battery pack defined by a battery supplier is selected, and is taken as the final lower limit value of the state-of-charge. If the evaluated temperature in the future 10 days is reduced, the state-of-charge value needs to be adjusted to be 25% or above 25% in order to start up the vehicle, so that the lower limit value of the state-of-charge is adjusted to be 25% from a fixed value of 15%, and the state-of-charge value being no less than 25% is maintained; for example, the vehicle is stopped and can not be used when the state-of-charge value is about to be dropped below 25%; as an alternative, the state-of-charge value is kept above 25% by charging when the state-of-charge value of the power battery is dropped below 25%, so that a problem that a battery discharge power does not meet the start-up power requirement of the vehicle engine after the vehicle is stopped and powered-off due to the drop of power battery pack temperature, which is further caused due to the drop of ambient temperature in the future 10 days, so that the engine cannot be started, and the vehicle cannot be used is solved.

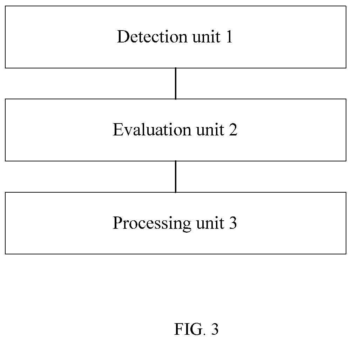

FIG. 3 is a structural block diagram of a device for controlling a lower limit of a state-of-charge of a power battery according to one embodiment of the present disclosure. As shown in FIG. 3, the control device includes: a detection unit 1, an evaluation unit 2, and a processing unit 3, where the detection unit 1 is configured to detect a minimum ambient temperature and a minimum power battery temperature in at least one time period; the evaluation unit 2 is configured to evaluate a minimum power battery temperature in a preset time period after the at least one time period according to the minimum ambient temperature and the minimum power battery temperature in the at least one time period; the processing unit 3 is configured to determine a minimum state-of-charge value that can meet a start-up power requirement of a vehicle engine at a minimum power battery temperature in the preset time period according to the minimum power battery temperature in the preset time period, and adjust a lower limit value of the state-of-charge according to the minimum state-of-charge value .

In one preferable embodiment, the minimum ambient temperature and the minimum power battery temperature in the at least one time period only include a minimum ambient temperature and a minimum power battery temperature in a first time period, the evaluation unit 2 is further configured to: calculate the minimum power battery temperature in the preset time period according to the minimum power battery temperature, a temperature constant and a first power battery temperature evaluation factor in the first time period.

In one preferable embodiment, the minimum ambient temperature and the minimum power battery temperature in the at least one time period include a minimum ambient temperature and a minimum power battery temperature in a first time period and a minimum ambient temperature and a minimum power battery temperature in a second time period, the second time period is subsequent to the first time period, the evaluation unit 2 is further configured to: evaluate the minimum power battery temperature in the preset time period as the minimum power battery temperature in the first time period when determining that the minimum ambient temperature in the first time period is lower than or equal to the minimum ambient temperature in the second time period, and the minimum power battery temperature in the first time period is lower than or equal to the minimum power battery temperature in the second time period; or evaluate the minimum power battery temperature in the preset time period as the minimum power battery temperature in the second time period when determining that the minimum ambient temperature in the first time period is lower than or equal to the minimum ambient temperature in the second time period, and the minimum power battery temperature in the first time period is higher than the minimum power battery temperature in the second time period.

In one preferable embodiment, the minimum ambient temperature and the minimum power battery temperature in the at least one time period include a minimum ambient temperature and a minimum power battery temperature in a first time period and a minimum ambient temperature and a minimum power battery temperature in a second time period, the second time period is subsequent to the first time period, the evaluation unit 2 is further configured to: calculate the minimum power battery temperature in the preset time period according to the minimum power battery temperature in the first time period, the minimum power battery temperature in the second time period and a second power battery temperature evaluation factor when determining that the minimum ambient temperature in the first time period is higher than the minimum ambient temperature in the second time period, and the minimum power battery temperature in the first time period is higher than the minimum power battery temperature in the second time period; or calculate the minimum power battery temperature in the preset time period according to the minimum power battery temperature in the first time period, a temperature constant and a third power battery temperature evaluation factor when determining that the minimum ambient temperature in the first time period is higher than the minimum ambient temperature in the second time period, and the minimum power battery temperature in the first time period is lower than or equal to the minimum power battery temperature in the second time period.

In one preferable embodiment, the processing unit 3 is configured to substitute the minimum power battery temperature in the preset time period into a discharge power Map of the power battery to obtain the minimum state-of-charge value.

The embodiment of the device for controlling the lower limit of the state-of-charge of the power battery has basically the same technical contents with the embodiment of the method for controlling the lower limit of the state-of-charge of the power battery, so that the embodiment of the device for controlling the lower limit of the state-of-charge of the power battery is not repeatedly described here.

A vehicle is further provided in the present disclosure, this vehicle includes the aforesaid device for controlling the lower limit of the state-of-charge of the power battery.

A computer readable storage medium is further provided in the present disclosure, the computer readable storage medium stores an instruction, that causes a machine to perform the aforesaid method for controlling the lower limit of the state-of-charge of the power battery.

The embodiment of the vehicle and the embodiment of the computer readable storage medium have basically the same technical contents with the embodiment of the method for controlling the lower limit of the state-of-charge of the power battery, so that the embodiment of the vehicle and the embodiment of the computer readable storage medium are not repeatedly described here.

The foregoing embodiments are only preferable embodiments of the present disclosure, and should not be regarded as limitations to the present disclosure. All modifications, equivalent replacements, and improvements, which are made within the spirit and the principle of the present disclosure, should all be included in the protection scope of the present disclosure.

## Claims

1. A method for controlling a lower limit of a state-of-charge of a power battery, comprising:
detecting a minimum ambient temperature and a minimum power battery temperature in at least one time period;
evaluating a minimum power battery temperature in a preset time period after the at least one time period according to the minimum ambient temperature and the minimum power battery temperature in the at least one time period;
determining a minimum state-of-charge value that can meet a start-up power requirement of a vehicle engine at the minimum power battery temperature in the preset time period according to the minimum power battery temperature in the preset time period;
adjusting a lower limit value of the state-of-charge according to the minimum state-of-charge value.

2. The method for controlling the lower limit of the state-of-charge of the power battery according to claim 1, wherein the minimum ambient temperature and the minimum power battery temperature in the at least one time period only comprise a minimum ambient temperature and a minimum power battery temperature in a first time period, said evaluating the minimum power battery temperature in the preset time period after the at least one time period according to the minimum ambient temperature and the minimum power battery temperature in the at least one time period comprises:
calculating the minimum power battery temperature in the preset time period according to the minimum power battery temperature, a temperature constant and a first power battery temperature evaluation factor in the first time period.

3. The method for controlling the lower limit of the state-of-charge of the power battery according to claim 1, wherein the minimum ambient temperature and the minimum power battery temperature in the at least one time period comprise a minimum ambient temperature and a minimum power battery temperature in a first time period and a minimum ambient temperature and a minimum power battery temperature in a second time period, the second time period is subsequent to the first time period, evaluating the minimum power battery temperature in the preset time period after the at least one time period according to the minimum ambient temperature and the minimum power battery temperature in the at least one time period comprises:
evaluating the minimum power battery temperature in the preset time period as the minimum power battery temperature in the first time period, when determining that the minimum ambient temperature in the first time period is lower than or equal to the minimum ambient temperature in the second time period, and the minimum power battery temperature in the first time period is lower than or equal to the minimum power battery temperature in the second time period;
evaluating the minimum power battery temperature in the preset time period as the minimum power battery temperature in the second time period, when determining that the minimum ambient temperature in the first time period is lower than or equal to the minimum ambient temperature in the second time period, and the minimum power battery temperature in the first time period is higher than the minimum power battery temperature in the second time period.

4. The method for controlling the lower limit of the state-of-charge of the power battery according to claim 1, wherein the minimum ambient temperature and the minimum power battery temperature in the at least one time period comprise a minimum ambient temperature and a minimum power battery temperature in a first time period and a minimum ambient temperature and a minimum power battery temperature in a second time period, the second time period is subsequent to the first time period, evaluating the minimum power battery temperature in the preset time period after the at least one time period according to the minimum ambient temperature and the minimum power battery temperature in the at least one time period comprises:
calculating the minimum power battery temperature in the preset time period according to the minimum power battery temperature in the first time period, the minimum power battery temperature in the second time period and a second power battery temperature evaluation factor when determining that the minimum ambient temperature in the first time period is higher than the minimum ambient temperature in the second time period, and the minimum power battery temperature in the first time period is higher than the minimum power battery temperature in the second time period;
calculating the minimum power battery temperature in the preset time period according to the minimum power battery temperature in the first time period, a temperature constant and a third power battery temperature evaluation factor when determining that the minimum ambient temperature in the first time period is higher than the minimum ambient temperature in the second time period, and the minimum power battery temperature in the first time period is lower than or equal to the minimum power battery temperature in the second time period.

5. The method for controlling the lower limit of the state-of-charge of the power battery according to claim 1, wherein determining the minimum state-of-charge value that can meet the start-up power requirement of the vehicle engine at the minimum power battery temperature in the preset time period according to the minimum power battery temperature in the preset time period comprises:
substituting the minimum power battery temperature in the preset time period into a discharge power Map of the power battery to obtain the minimum state-of-charge value.

6. A device for controlling a lower limit of a state-of-charge of a power battery, comprising a detection unit, an evaluation unit and a processing unit, wherein:
the detection unit is configured to detect a minimum ambient temperature and a minimum power battery temperature in at least one time period;
the evaluation unit is configured to evaluate a minimum power battery temperature in a preset time period after the at least one time period according to the minimum ambient temperature and the minimum power battery temperature in the at least one time period;
the processing unit is configured to determine a minimum state-of-charge value that can meet a start-up power requirement of a vehicle engine at the minimum power battery temperature in the preset time period according to the minimum power battery temperature in the preset time period;
adjust a lower limit value of the state-of-charge according to the minimum state-of-charge value.

7. The device for controlling the lower limit of the state-of-charge of the power battery according to claim 6, wherein the minimum ambient temperature and the minimum power battery temperature in the at least one time period only comprise a minimum ambient temperature and a minimum power battery temperature in a first time period, the evaluation unit is further configured to:
calculate the minimum power battery temperature in the preset time period according to the minimum power battery temperature, a temperature constant and a first power battery temperature evaluation factor in the first time period.

8. The device for controlling the lower limit of the state-of-charge of the power battery according to claim 6, wherein the minimum ambient temperature and the minimum power battery temperature in the at least one time period comprise a minimum ambient temperature and a minimum power battery temperature in a first time period and a minimum ambient temperature and a minimum power battery temperature in a second time period, the second time period is subsequent to the first time period, the evaluation unit is further configured to:
evaluate the minimum power battery temperature in the preset time period as the minimum power battery temperature in the first time period when determining that the minimum ambient temperature in the first time period is lower than or equal to the minimum ambient temperature in the second time period, and the minimum power battery temperature in the first time period is lower than or equal to the minimum power battery temperature in the second time period;
evaluate the minimum power battery temperature in the preset time period as the minimum power battery temperature in the second time period when determining that the minimum ambient temperature in the first time period is lower than or equal to the minimum ambient temperature in the second time period, and the minimum power battery temperature in the first time period is higher than the minimum power battery temperature in the second time period.

9. The device for controlling the lower limit of the state-of-charge of the power battery according to claim 6, wherein the minimum ambient temperature and the minimum power battery temperature in the at least one time period comprise a minimum ambient temperature and a minimum power battery temperature in a first time period and a minimum ambient temperature and a minimum power battery temperature in a second time period, the second time period is subsequent to the first time period, the evaluation unit is further configured to:
calculate the minimum power battery temperature in the preset time period according to the minimum power battery temperature in the first time period, the minimum power battery temperature in the second time period and a second power battery temperature evaluation factor when determining that the minimum ambient temperature in the first time period is higher than the minimum ambient temperature in the second time period, and the minimum power battery temperature in the first time period is higher than the minimum power battery temperature in the second time period;
calculate the minimum power battery temperature in the preset time period according to the minimum power battery temperature in the first time period, a temperature constant and a third power battery temperature evaluation factor when determining that the minimum ambient temperature in the first time period is higher than the minimum ambient temperature in the second time period, and the minimum power battery temperature in the first time period is lower than or equal to the minimum power battery temperature in the second time period.

10. The device for controlling the lower limit of the state-of-charge of the power battery according to claim 6, wherein the processing unit is configured to:
substitute the minimum power battery temperature in the preset time period into a discharge power Map of the power battery to obtain the minimum state-of-charge value.

11. A vehicle, comprising the device for controlling the lower limit of the state-of-charge of the power battery according to any one of claims 6-10.

12. A computer readable storage medium which stores an instruction that is executed to cause a machine to implement the method for controlling the lower limit of the state-of-charge of the power battery according to any one of claims 1-5.
